(19) Europäisches Patentamt
European Patent Office
Office européen des brevets

(11) **EP 2 673 345 B1**

(12) **FASCICULE DE BREVET EUROPEEN**

(45) Date de publication et mention
de la délivrance du brevet:
**07.11.2018 Bulletin 2018/45**

(51) Int Cl.:
***C10L 1/18*** *(2006.01)*      ***C10L 1/00*** *(2006.01)*

(21) Numéro de dépôt: **12703781.0**

(22) Date de dépôt: **07.02.2012**

(86) Numéro de dépôt international:
**PCT/EP2012/052067**

(87) Numéro de publication internationale:
**WO 2012/107454 (16.08.2012 Gazette 2012/33)**

(54) **UTILISATION DE COMPOSITIONS LIQUIDES POUR MARQUER LES CARBURANTS ET COMBUSTIBLES HYDROCARBONES LIQUIDES ET PROCEDE DE DETECTION DES MARQUEURS**

VERWENDUNG FLÜSSIGER ZUSAMMENSETZUNGEN ZUM MARKIEREN VON FLÜSSIGEN KRAFTSTOFFEN UND BRENNSTOFFEN AUF KOHLENWASSERSTOFFBASIS, UND VERFAHREN ZUR DETEKTION DER MARKER

USE OF LIQUID COMPOSITIONS FOR MARKING LIQUID HYDROCARBON-BASED FUELS AND COMBUSTIBLES, AND PROCESS FOR DETECTING THE MARKERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.02.2011 FR 1151007**

(43) Date de publication de la demande:
**18.12.2013 Bulletin 2013/51**

(73) Titulaire: **Total Raffinage Marketing**
**92800 Puteaux (FR)**

(72) Inventeurs:
• **AMBLARD, Bénédicte**
**F-69007 Lyon (FR)**
• **FADEL, Denis**
**F-38670 Chasse sur Rhône (FR)**
• **MERCIER, Jean-Paul**
**F-75016 Paris (FR)**
• **TORT, Frédéric**
**F-69530 Brignais (FR)**

• **TREMOLIERE, Christian**
**F-06460 Saint-Vallier-de-Thiey (FR)**

(74) Mandataire: **Casalonga**
**Casalonga & Partners**
**Bayerstraße 71/73**
**80335 München (DE)**

(56) Documents cités:
**EP-A1- 1 484 385        EP-A2- 1 591 514**
**WO-A1-01/36354         WO-A1-2010/039152**
**US-A- 3 862 120         US-A- 4 141 692**
**US-A- 5 984 983         US-A1- 2008 096 790**
**US-A1- 2009 253 612**

• **DATABASE WPI Week 200423 Thomson Scientific, London, GB; AN 2004-247874 XP002655621, & WO 2004/014332 A1 (KAO CORP) 19 février 2004 (2004-02-19)**

**Description**

DOMAINE TECHNIQUE

Cette invention concerne l'utilisation de composés chimiques spécifiques comme marqueurs de produits hydrocarbonés liquides ou hydrocarbures liquides, tels que les carburants et les combustibles liquides hydrocarbonés, pétrole brut. Ces marqueurs peuvent être utilisés soit directement dans le produit hydrocarboné, soit via un package d'additifs qui est ensuite incorporé au carburant ou combustible.

Ces marqueurs sont destinés à marquer l'hydrocarbure liquide pour qu'il puisse être rapidement identifié en ce qui concerne sa source, son intégrité, et notamment celle des additifs qui sont incorporés. Lorsque les marqueurs chimiques sont préalablement mélangés avec un ou plusieurs additifs (couramment dénommé dans la profession « package d'additifs ») ils permettent l'identification du type et de la quantité de package incorporé dans l'hydrocarbure liquide.

TECHNIQUES ANTERIEURES

De nombreuses techniques ont été utilisées pour marquer des produits hydrocarbonés liquides dans le but d'identifier leur source et leur intégrité, elles impliquent typiquement l'incorporation de petites quantités d'additifs ou marqueurs dans l'hydrocarbure.

La détection des marqueurs peut être réalisée par un certain nombre de techniques analytiques standard comme la colorimétrie, l'IR, la spectroscopie UV ou UV-Visible, la spectrométrie de masse, la spectroscopie d'adsorption atomique, la chromatographie gazeuse et/ou la chromatographie liquide (certaines de ces techniques de détection et d'analyse pouvant éventuellement être couplées entre elles).

Lorsqu'un hydrocarbure liquide, tel que du pétrole brut, une base pétrolière issue du raffinage, un carburant ou un combustible, contenant un marqueur est accidentellement déversé dans l'environnement,(par exemple fuites d'hydrocarbures qui s'échappent de bacs de stockage, de réservoirs de station-service, de pipelines, etc,), la détection du marqueur permet d'identifier la source de l'hydrocarbure.

Par ailleurs, la présence et la concentration des additifs incorporés dans les carburants et combustibles pour en améliorer les performances peuvent être déduites en mesurant la concentration du marqueur ajouté soit dans le carburant ou le combustible, soit dans l'additif ou le package d'additifs. Le carburant ou le combustible hydrocarboné marqué peut être contrôlé partout dans son réseau de distribution afin de vérifier son intégrité. On peut ainsi s'assurer que le carburant ou le combustible n'a pas subi de contamination ou de dilution avec d'autres liquides hydrocarbonés ; cela permet aussi de vérifier qu'il n'y pas de sous- ou surdosage en additifs dans le carburant ou le combustible commercial. Lorsqu'un marqueur est inclus dans le package d'additifs en quantité donnée, la concentration du package dans le carburant ou combustible hydrocarboné peut être déduite en déterminant la quantité de marqueur dans le carburant ou combustible hydrocarboné final en mettant en oeuvre une technique d'analyse quantitative, fiable et précise.

Des marqueurs radioactifs à base de tritium, d'iode 131, ou de soufre 35 ont été utilisés pour tracer du pétrole brut et des carburants dans des pipelines et dans des installations de stockage.

Pour des raisons essentiellement fiscales, chaque type de carburant ou combustible destiné au grand public est additivé avec un marqueur spécifique, appelé traceur douanier, qui est en général un colorant particulier ajouté en quantité déterminée par la réglementation du pays de commercialisation.

US 4 141 692 décrit l'utilisation d'hydrocarbures chlorés ayant au moins 3 atomes de chlore, au moins deux atomes de carbone et un ratio d'atome Cl/C d'au moins 1 à 3 comme marqueurs d'hydrocarbures. La détection de ces marqueurs est faite par un détecteur à capture d'électrons après une séparation par chromatographie en phase gazeuse. L'utilisation d'hydrocarbures chlorés comme marqueurs de carburants et combustibles hydrocarbonés liquides présentent des inconvénients, notamment une certaine toxicité (dégagement de chlore gazeux et/ou augmentation d'émissions d'hydrocarbures chlorés potentiellement générateurs de gaz à effet de serre.)

US4 209 302 décrit l'utilisation de 1-(4-morpholino)-3-(alpha ou beta-naphthylamino) propane à raison de 0,5 à 12 ppm comme marqueur de carburants de type essence. Ces marqueurs ne colorent pas l'essence ; pour les détecter, il est nécessaire de procéder à une extraction chimique suivie un traitement avec la 2-chloro-4-nitroaniline diazotée qui conduit à une solution de couleur rose, couleur que l'on peut mesurer par colorimétrie. L'inconvénient majeur de cette technique de détection est l'étape d'extraction chimique préliminaire qui peut entraîner des erreurs accrues dans la mesure.

FR 2 212 390 ou US 3 862 120 décrivent des colorants diazoïques pour liquides non miscibles à l'eau, notamment les carburants pétroliers et un procédé permettant de détecter quantitativement leur présence dans lesdits liquides par adsorption IR ou par chromatogrpahie en couche mince. US 5 234 475 propose d'utiliser comme marqueurs d'hydrocarbures liquides (essence, diesel, jet, ...) un ou plusieurs fullerènes en quantités allant de 0,01 à 100 ppm, détectables par spectroscopie de masse ou par spectroscopie UV-Visible. La fabrication des fullerènes n'étant pas à l'heure actuelle réellement industrielle, ces molécules sont beaucoup trop chères pour être incorporées dans des carburants et combustibles de commodité destinés au grand public.

EP 512 404 décrit l'utilisation, à titre de marqueurs d'hydrocarbures liquides, de composés chimiques ayant un cycle aromatique substitué par 2 groupements $NO_2$ et un groupement amide ou ester, détectables par chromatographie en phase gazeuse. Ces marqueurs peuvent être incorporés directement dans le carburant ou bien via le package d'additifs. Ces composés s'hydrolysent en présence de traces d'eau dans l'hydrocarbure, rendant leur utilisation peu fiable pour le marquage et la détection quantitative précise du carburant.

EP 1 699 907 décrit des package d'additifs pour carburants ou lubrifiants qui comprennent des dérivés d'anthraquinone comme marqueurs et l'utilisation de ces packages dans des carburants et lubrifiants.

EP 1 816 181 décrit des marqueurs pour carburants éthanolés qui sont des composés aromatiques substitués, ayant un axe de symétrie ternaire et contenant N, O, P, B utilisables de préférence entre 0,01 ppm et 50 ppm masse dans les carburants éthanolés.

WO 2010/039152 décrit un procédé de marquage de carburants dans un but d'authentification, afin de s'assurer par exemple de leur origine et/ou des éventuels mélanges ou dilutions. La nature chimique des marqueurs n'est pas détaillée, il est seulement indiqué que les marqueurs peuvent être des colorants ou des isotopes non radioactifs.

US 5 984 983 décrit l'utilisation de composés carbonylés comme marqueurs de carburants. Ces marqueurs peuvent être choisis parmi les cétones, aldéhydes, esters dont les lactones), amides (dont les lactames et les imides, anhydrides et acides carboxyliques. la présence de ces marqueurs est détectée par l'absorption en IR des fonctions carbonyles. Le seul exemple concerne un carburant essence marqué avec du dibutyl phtalate (pic d'absorbance1740 $cm^{-1}$) et de l'acétophénone (pic d'absorbance 1700 $cm^{-1}$)

RÉSUMÉ DE L'INVENTION

La présente invention concerne l'utilisation d'au moins une composition liquide pour marquer les carburants et combustibles hydrocarbonés liquides dans lesquels elle est incorporée, ladite composition liquide comprenant :

a) au moins un marqueur, choisi parmi les composés aliphatiques ou cycloaliphatiques suivants :

- isobutyrate de tricyclodécényle (3a,4,5,6,7,7a-hexahydro-4,7-methano-1 h-inden-5 (ou 6) -yl) (CAS 67634-20-2)
- propionate de tricyclodécényle (CAS 17511-60-3)
- acétate de cis 3 hexenyle (CAS 3681-71-8)
- linalool d'éthyle (CAS 10339-55-6)
- acétate de prényle (CAS 1191-16-8)
- myristate d'éthyle (CAS 124-06-1)
- acétate de para tertio butyl cyclo hexyl (CAS 32210-23-4)
- acétate de butyle (CAS 123-86-4),
- acétate de tricyclodécényle (4,7-méthano-1h-inden-6-ol, 3a,4,5,6,7,7a-hexahydro-)(CAS 5413-60-5)
- caprate d'éthyle (CAS 110-38-3)

b) un solvant ou un mélange de solvants,
c) et éventuellement un ou plusieurs additifs fonctionnels pour carburants et/ou combustibles hydrocarbonés liquides, choisis parmi les détergents, dispersants, améliorants de combustion, anti-mousse, améliorants de conductivité, additifs anti-corrosion, additifs de lubrifiance, agents anti-usure et/ou modificateurs de frottement, agents chélatants et/ou séquestrants de métaux, désémulsifiants, colorants, additifs de tenue à froid, passivateurs de métaux, neutraliseurs d'acidité, marqueurs différents des marqueurs a).

Les marqueurs a) pour compositions hydrocarbonées liquides définis ci-dessus satisfont aux conditions suivantes :

- avoir une stabilité suffisante dans les conditions d'utilisation habituelles de la composition hydrocarbonée liquide,
- maintenir les propriétés physico-chimiques du carburant ou du combustible,
- être compatible avec les composants du package d'additifs et avec ceux du carburant et du combustible
- avoir une stabilité suffisante pour pouvoir être utilisé sous forme de solutions concentrées,
- pouvoir être utilisés en faible quantité et être détectable par des techniques de détection simples, rapides, précises & fiables,
- se distinguer des marqueurs réglementaires et légaux.

De manière avantageuse, certains des marqueurs a) définis ci-dessus présentent, outre les propriétés de marquage énoncées ci-dessus, des propriétés ou performances complémentaires ; c'est par exemple le cas du 3a,4,5,6,7,7a-hexahydro-4,7-methano-1 h-inden-5 (ou 6)-yl isobutyrate, du tricyclodécényl propionate et du 4,7-méthano-1h-inden-6-ol, 3a,4,5,6,7,7a-hexahydro-, acétate qui améliorent l'odeur et/ou des propriétés bactéricides des carburants et combustibles auxquels ils sont incorporés, voir par exemple EP 1 591 514 ; l'acétate de butyle, le linalool d'éthyle ont également des propriétés odorantes, voir par exemple WO 01/363544 et US 2008/096790.

Le (ou les marqueurs) a) est ajouté en quantité suffisante pour assurer sa détection, et de préférence sa quantification après qu'il ait été ajouté au carburant ou au combustible. Typiquement chaque marqueur a) est ajouté à une concentration allant en général de 1 à 500 parties par million en masse (ppm m/m) par rapport à la masse totale de carburant ou combustible liquide hydrocarboné additivé, et de préférence à une concentration allant de 1 à 50 ppm m/m. Typiquement, le seuil de détection minimal de ces marqueurs a) est en général de 1 ppm m/m pour une détection qualitative (i-e qui permet d'identifier la présence du marqueur a) et de 2 à 3 ppm m/m pour une détection quantitative.

Le (ou les solvants) b) dans lesquels le ou les marqueurs a) et les éventuels autres additifs c) de la composition liquide sont solubles, comprend en général des hydrocarbures aliphatiques et/ou aromatiques ou des mélanges d'hydrocarbures, par exemple des fractions d'essence, du kérosène, le décane, le pentadécane, le toluène, le xylène, et/ou l'éthylbenzène et/ou des mélanges de solvants commerciaux comme par exemple Solvarex 10, Solvarex LN, Solvent Naphta, Shellsol AB, Shellsol D, Solvesso 150, Solvesso 150 ND, Solvesso 200, Exxsol, ISOPAR et éventuellement des adjuvants de dissolution polaires, comme le 2-éthylhexanol, le décanol, l'isodécanol et/ou l'isotridécanol.

De manière non exhaustive, le ou les additifs fonctionnels c) peuvent être choisis parmi :

❖ les additifs améliorant de combustion ; pour les carburants de type gazole, on peut citer les additifs procétane, notamment (mais non limitativement) choisis parmi les nitrates d'alkyle, de préférence le nitrate de 2-éthyl hexyle, les peroxydes d'aroyle, de préférence le peroxyde de benzyle, et les peroxydes d'alkyle, de préférence le peroxyde de di ter-butyle; pour les carburants de type essence, on peut citer les additifs améliorant l'indice d'octane; pour les combustibles tels que fioul domestique, fioul lourd, fioul marine, on peut citer le méthylcyclopentadiényl manganèse tricarbonyl (MMT) ;

❖ les additifs anti-oxydants, tels que des amines aliphatiques, aromatiques, les phénols encombrés, tels que BHT, BHQ ;

❖ les désémulsifiants ;

❖ les additifs anti-statiques ou améliorants de conductivité ;

❖ les colorants ;

❖ les additifs anti-mousse, notamment (mais non limitativement) choisis par exemple parmi les polysiloxanes, les polysiloxanes oxyalkylés, et les amides d'acides gras issus d'huiles végétales ou animales ; des exemples de tels additifs sont donnés dans EP 861 182, EP 663 000, EP 736 590 ;

❖ les additifs détergents ou dispersants, notamment (mais non limitativement) choisis dans le groupe constitué par les aminés, les succinimides, les succinamides, les alkénylsuccinimides, les polyalkylamines, les polyalkyles polyamines, les polyétheramines, les bases de Mannich; des exemples de tels additifs sont donnés dans EP 938 535 ;

❖ les additifs anti-corrosion tels que les sels d'ammonium d'acides carboxyliques ;

❖ les agents chélatants et/ou les agents séquestrants de métaux, tels que les triazoles, les disalicylidène alkylène diamines, et notamment le N,N' bis (salicydène)propane diamine ;

❖ les additifs de lubrifiance, agents anti-usure et/ou modificateurs de frottement, notamment (mais non limitativement) choisi dans le groupe constitué par les acides gras et leurs dérivés ester ou amide, notamment le monooléate de glycérol, et les dérivés d'acides carboxyliques mono- et polycycliques ; des exemples de tels additifs sont donnés dans les documents suivants: EP 680 506, EP 860 494, WO 98/04656, EP 915 944, FR2 772 783, FR 2 772 784 ;

❖ les additifs de tenue à froid et notamment les additifs améliorant le point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans EP 71 513, EP 100 248, FR 2 528 051, FR 2 528 051, FR 2 528 423, EP1 12 195, EP 1 727 58, EP 271 385, EP 291367 ; les additifs d'anti-sédimentation et/ou dispersants de paraffines notamment (mais non limitativement) choisis dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne ; des résines alkyl phénol/aldéhyde ; des exemples de tels additifs sont donnés dans EP 261 959, EP593 331, EP 674 689, EP 327 423, EP 512 889, EP 832 172; US 2005/0223631 ; US 5 998 530 ; WO 93/14178; les additifs polyfonctionnels d'opérabilité à froid choisis notamment dans le groupe constitué par les polymères à base d'oléfine et de nitrate d'alkényle tels que décrits dans EP 573 490 ;

❖ d'autres additifs améliorant la tenue à froid et la filtrabilité (CFI), tels que les copolymères EVA et/ou EVP ;

❖ les passivateurs de métaux, tels que les triazoles, les benzotriazoles alkylés ;

❖ les neutralisateurs d'acidité tels que les alkylamines cycliques ;

❖ d'autres marqueurs que ceux correspondant à la définition des marqueurs a) et notamment les marqueurs imposés par la réglementation, par exemple les colorants spécifiques à chaque type de carburant ou combustible.

Les additifs fonctionnels c) sont en général ajoutés dans la composition hydrocarbonée liquide (carburant ou combustible) en quantité allant de 5 à 1 000 ppm via au moins une composition liquide selon l'invention et/ou incorporés via un autre package d'additifs et/ou directement dans la composition hydrocarbonée.

Les carburants et combustibles hydrocarbonés liquides comprennent des distillats moyens de température d'ébullition comprise entre 100 et 500°C ; leur température de cristallisation commençante TCC est souvent supérieure ou égale à -20°C, en général comprise entre -15°C et +10°C. Ces distillats sont des mélanges de bases pouvant être choisies par exemple parmi les distillats obtenus par distillation directe de pétrole ou d'hydrocarbures bruts, les distillats sous vide, les distillats hydrotraités, des distillats issus du craquage catalytique et/ou de l'hydrocraquage de distillats sous vide, les distillats résultant de procédés de conversion type ARDS (par désulfuration de résidu atmosphérique) et/ou de viscoréduction.

Les carburants et combustibles liquides peuvent également contenir des coupes légères comme les essences issues de la distillation, des unités de craquage catalytique ou thermique, des unités d'alkylation d'isomérisation, de désulfuration, des unités de vapocraquage.

Les carburants et combustibles liquides peuvent également contenir de nouvelles sources de distillats, parmi lesquelles on peut notamment citer :

- les coupes les plus lourdes issues des procédés de craquage et de viscoréduction concentrées en paraffines lourdes, comprenant plus de 18 atomes de carbone,
- les distillats synthétiques issus de la transformation du gaz tels que ceux issus du procédé Fischer Tropsch,
- les distillats synthétiques résultant du traitement de la biomasse d'origine végétale et/ou animale, comme notamment le NexBTL, prise seule ou en mélange. La biomasse végétale ou animale et les huiles végétales ou animales pouvant être hydrotraitées ou hydrodésoxygénées,
- les gazoles de cokeur,
- les alcools, tels que méthanol, éthanol, butanols, les éthers, (MTBE, ETBE, ...) en général utilisés en mélange avec les carburants essence, mais parfois avec des carburants plus lourds de type gazole,
- les huiles végétales et/ou animales et/ou leurs esters, tels que les esters méthyliques ou éthyliques d'huiles végétales (EMHV, EEHV),
- les huiles végétales et/ou animales hydrotraitées et/ou hydrocraquées et/ou hydrodéoxygénées (HDO)
- et/ou encore les biodiesel d'origine animale et/ou végétale.

Ces nouvelles bases carburants et combustibles peuvent être utilisées seules ou en mélange avec des distillats moyens pétroliers classiques comme base carburant et/ou combustible ; elles comprennent en général de longues chaînes paraffiniques supérieures ou égales à 10 atomes de carbone et préférentiellement de C14 à C30.

En général la teneur en soufre des carburants et combustibles hydrocarbonés liquides additivés prêts à l'utilisation est inférieure à 5.000 ppm m/m, de préférence inférieure à 500 ppm m/m, et plus préférentiellement inférieure à 50 ppm m/m, voire même inférieure à 10 ppm m/m, et avantageusement sans soufre, notamment pour les carburants de type gazole et jet.

Pour les distillats type fioul domestique la teneur en soufre est inférieure à 1.000 ppm m/m.

Les carburants et combustibles hydrocarbonés liquides peuvent être des produits commerciaux, notamment :

- les carburants essence dont la température d'ébullition est en général comprise entre 20 et 200°C,
- les carburants jet,
- les gazole ou carburants diesel,
- les fiouls domestiques,
- les fiouls lourds dont la température d'ébullition est comprise entre 120 et 500 °C, de préférence 140 et 400 °C

La présente invention concerne également un procédé d'analyse du carburant ou combustible hydrocarboné liquide additivé avec au moins un marqueur a) qui peut être ou non contenu dans une composition liquide telle que définie précédemment par détection et éventuellement analyse quantitative du ou des marqueur(s) a) ajouté au carburant ou au combustible liquide hydrocarboné.

Le procédé selon l'invention, comprend les étapes suivantes :

- analyse d'un échantillon de composition liquide hydrocarbonée contenant au moins un marqueur a) par une méthode analytique simple, fiable et robuste,
- puis détection d'un ou plusieurs marqueurs a)

- et éventuellement mesure de la concentration de chacun des marqueurs a) détecté au sein du carburant ou combustible liquide hydrocarboné.

Les méthodes analytiques de détection des marqueurs a) mises en oeuvre dans le cadre du procédé selon l'invention incluent, mais ne sont pas limitées à la chromatographique en phase gazeuse ou liquide couplée à un ou plusieurs détecteurs des marqueurs a) tels que détecteur de capture d'électrons, spectromètre de masse et/ou détecteur à ionisation de flamme.

La chromatographie en phase gazeuse est une des méthodes analytiques préférées pour la mise en oeuvre du procédé selon l'invention ; elle permet de séparer des produits chimiques selon leur interaction avec la phase stationnaire de la colonne de chromatographie, soit à une température donnée constante, soit selon un programme donné de températures. Chaque composé chimique interagit différemment avec une phase stationnaire donnée dans la condition donnée de température et a donc dans ces conditions définies un temps de rétention donné. Une fois déterminé, le temps de rétention peut être utilisé pour identifier le marqueur a) tandis que l'aire du pic peut être utilisée pour déterminer la concentration du marqueur. La chromatographie gazeuse classique (GC) et la chromatographie gazeuse multidimensionnelle de type « heart-cutting » (GC-GC) couplée à un spectromètre de masse (MS) sont les méthodes analytiques préférées, la chromatographie gazeuse multidimensionnelle de type « heart-cutting » (GC-GC) qui permet une meilleure séparation est particulièrement préférée.

On peut également citer la chromatographie bidimensionnelle (GC*GC ou GC2D) dont un descriptif détaillé est disponible dans l'article intitulé « *Apport de la chromatographie en phase gazeuse bidimensionnelle. Chromatographie en phase gazeuse, GC×GC, chromatographie bidimensionnelle* », disponible sur *www.spectrabiology.com/Documents/SA247_26-31.pdf.*

## MANIERES DE REALISER L'INVENTION

Lorsque le procédé d'analyse selon l'invention utilise une méthode de chromatographie en phase gazeuse, les phases stationnaires utilisées pour séparer et identifier les marqueurs a) selon l'invention sont en général des polymères siliconés dérivés de polysiloxane. Cette phase est greffée sur la colonne en silice. La polarité de la colonne peut être modifiée en substituant un groupement phényle ou cyanopropyle à un groupement méthyle.

Il existe d'autres phases beaucoup plus polaires à base de polyéthylène glycol. Elles sont greffées sur les parois en silice de la colonne. Les colonnes utilisées sont en général des colonnes capillaires.

Les détecteurs couplés à la chromatographie sont de préférence des détecteurs de spectrométrie de masse. La spectrométrie de masse est une technique très sensible et spécifique qui permet de détecter à partir des ions de la molécule à doser de très faible teneur (typiquement jusqu'à 1 ppm m/m), ces ions pouvant être spécifiques des marqueurs a) selon l'invention.

Les conditions opératoires de la chromatographie multidimensionnelle GC-GC, sont en général les suivantes :

1) injection dans une 1ère colonne de chromatographie d'un mélange liquide comprenant une composition hydrocarbonée liquide (par exemple un carburant ou un combustible liquide contenant la composition d'additifs définie plus haut) et un ou plusieurs marqueurs a) ;

2) séparation du ou des marqueurs a) et d'éventuels autres composés contenus dans le mélange ;

3) injection de la fraction dans une 2nde colonne de chromatographie pour assurer la séparation complète de tous les composés, dont les marqueurs a), puis passage dans un spectromètre de masse permettant l'identification de façon spécifique de chaque composé, (donc de chaque marqueur a)) et leur quantification éventuelle.

La longueur de la 1ère colonne est en général comprise entre 5 à 60 mètres, et est de préférence plus courte que celle de la 2ème colonne, qui va en général de 10 à 60 mètres.

L'injecteur est maintenu à une température suffisante pour assurer la vaporisation de tous les composés du mélange, cette température est typiquement comprise entre 200 et 350°C pour les mélanges hydrocarbonés à base de carburant ou de combustible liquide tels qu'essence, kérosène, gazole, fioul) et plus importante dans le cas d'huiles lubrifiantes.

L'analyse peut être effectuée à température constante, cette température pouvant varier entre 10°C et 300°C. L'analyse peut aussi être réalisée en utilisant la programmation de température. Dans ce cas le programme de température sera développé pour chaque type d'échantillon analysé essence, gazole ...

EXEMPLES

Exemple 1

Dans cet exemple, on compare le spectre de chromatographie gazeuse GC-GC d'un carburant commercial de type gazole EN 590 et celui du même carburant gazole additivé avec 7 ppm m/m de 4,7-méthano-1h-inden-6-ol, 3a,4,5,6,7,7a-hexahydro-, acétate (CAS 5413-60-5) (marqueur a)). Pour le carburant additivé avec le marqueur a), le spectrogramme montre un pic de rétention à 23,3 min, pic qui n'existe pas pour le carburant qui ne contient pas de marqueur a).

A l'aide d'un spectromètre de masse couplé à la GC-GC, on mesure une concentration en marqueur 4,7-méthano-1h-inden-6-ol, 3a,4,5,6,7,7a-hexahydro-, acétate (CAS 5413-60-5) a) de 6,7 ppm m/m (moyenne obtenue à partir de 3 mesures ; répétabilité : 10%)

Exemple 2

Dans cet exemple, on compare le spectre de chromatographie gazeuse GC-GC d'un carburant commercial de type essence EN 228 et celui du même carburant essence additivé avec des quantités variables d'acétate de butyle (CAS 123-86-4) (marqueur a)) allant de 1 et 20 ppm m/m.

Pour chaque concentration en marqueur a), on mesure la surface du pic ; l'ensemble des données est réuni dans le tableau ci-dessous.

| Concentration en marqueur a) dans le carburant essence (ppm m/m) | Surface du pic |
|---|---|
| 1 | 2.688 |
| 5 | 18.997 |
| 10 | 45.446 |
| 15 | 73.669 |
| 20 | 99.343 |

A partir des données de ce tableau, on construit une droite de calibration (surface du pic = f (concentration en marqueur a)) qui permet de calculer, pour une surface de pic donnée, la concentration en marqueur a)) correspondante. La droite de calibration correspondante peut être représentée par l'équation suivante :

$$Y = 5175{,}8 *x - 4764{,}3 \qquad R^2 = 0{,}9979$$

La valeur du coefficient de corrélation de la droite montre une bonne linéarité sur l'intervalle considéré.

Exemple 3

On prépare différents échantillons de gazole commercial EN 590 additivés avec des quantités variables de 4,7-méthano-1h-inden-6-ol, 3a,4,5,6,7,7a-hexahydro-, acétate (CAS 5413-60-5) (marqueur a)) allant de 1 à 20 ppm m/m. Pour chaque concentration en marqueur a), on mesure la surface du pic et on construit une droite de calibration (surface du pic = f (concentration en marqueur a)) qui peut être représentée par l'équation suivante :

$$Y = 0{,}00155 *x - 0{,}66999 \qquad R^2 = 0{,}99895$$

On prépare également un échantillon du même gazole commercial auquel on ajoute 8,9 ppm m/m. Cet échantillon est ensuite stocké dans un flacon hermétiquement clos à température ambiante pendant 3 mois.

Au bout de 3 mois de stockage, un autre laboratoire mesure à nouveau par GC / MS la teneur du traceur 4,7-méthano-1h-inden-6-ol, 3a,4,5,6,7,7a-hexahydro-, acétate (CAS 5413-60-5) dans l'échantillon et à l'aide de la droite de calibration la teneur en marqueur a) au bout de 3 mois, est égale à 8,65 ppm m/m.

Cet exemple montre que le marqueur incorporé au carburant reste parfaitement détectable dans le temps et reste aussi parfaitement quantifiable.

<u>Exemple 4</u>

Cet exemple concerne un hydrocarbure liquide de type essence EN 228 contenant 2 marqueurs a) différents selon la présente invention : acétate de butyle (CAS 123-86-4) et caprate d'éthyle (CAS 110-38-3) et un procédé d'analyse de ces 2 marqueurs par GC/MS.

Le carburant EN228 contenant les 2 marqueurs a) est analysé par chromatographie gazeuse classique équipée d'une colonne capillaire polaire et couplée à un détecteur MS (GC/MS).

A partir des données du chromatogramme et du spectrogramme réunies dans le tableau ci-dessous, on peut attribuer le temps de rétention à chacun des 2 marqueurs a) :

| Marqueur a) | Temps de rétention |
|---|---|
| acétate de butyle (CAS 123-86-4), | 7 minutes |
| caprate d'éthyle (CAS 110-38-3) | 27 minutes. |

On constate que les 2 marqueurs se distinguent parfaitement l'un de l'autre par leur temps de rétention différent mais aussi des autres molécules contenues dans le carburant.

<u>Exemple 5</u>

Cet exemple illustre l'utilisation de marqueur a) selon l'invention dans une essence commerciale de type EN 228. Le marqueur est ajouté via un package d'additifs améliorant les performances et est analysé en suivant la procédure décrite dans l'exemple 4.

Le marqueur, caprate d'éthyle (CAS 110-38-3) (marqueur a)) est incorporé dans un package d'additifs de performance commercial pour carburant essence contenant un détergent polymérique ; une huile porteuse synthétique et un mélange d'agents désémulsifiants. Le package additivé avec le marqueur a) résultant est incorporé dans un carburant essence sans plomb commercial EN 228 au dosage de 500 ppm m/m). Par analyse par chromatographie gazeuse classique couplée à un détecteur spectromètre de masse (GC/MS) selon les conditions de l'exemple 4, le caprate d'éthyle (CAS 110-38-3) est détecté 27 minutes après l'injection. Tous les autres composants de l'essence détectables par le spectromètre de masse ont traversé la colonne de chromatographie soit avant ou après le marqueur a), donc avec des temps de rétention bien différents.

**Revendications**

1. Utilisation d'au moins une composition liquide pour marquer les carburants et combustibles hydrocarbonés liquides dans lesquels elle est incorporée, ladite composition liquide comprenant :

   a) au moins un marqueur, choisi parmi les composés aliphatiques ou cycloaliphatiques suivants :

   - isobutyrate de tricyclodécényle (3a,4,5,6,7,7a-hexahydro-4,7-methano-1 h-inden-5 (ou 6) -yl) (CAS 67634-20-2)
   - propionate de tricyclodécényle (CAS 17511-60-3)
   - acétate de cis 3 hexenyle (CAS 3681-71-8)
   - linalool d'éthyle (CAS 10339-55-6)
   - acétate de prényle (CAS 1191-16-8)
   - myristate d'éthyle (CAS 124-06-1)
   - acétate de para tertio butyl cyclo hexyl (CAS 32210-23-4)
   - acétate de butyle (CAS 123-86-4),
   - acétate de tricyclodécényle (4,7-méthano-1h-inden-6-ol, 3a,4,5,6,7,7a-hexahydro-)(CAS 5413-60-5)
   - caprate d'éthyle (CAS 110-38-3)

   b) un solvant ou un mélange de solvants,

   c) et éventuellement un ou plusieurs additifs fonctionnels pour carburants et/ou combustibles hydrocarbonés liquides, choisis parmi les détergents, dispersants, améliorants de combustion, anti-mousse, améliorants de conductivité, additifs anti-corrosion, additifs de lubrifiance, agents anti-usure et/ou modificateurs de frottement, agents chélatants et/ou séquestrants de métaux, désémulsifiants, colorants,additifs de tenue à froid, passivateurs de métaux, neutraliseurs d'acidité, marqueurs différents des marqueurs a),.....

2. Procédé de détection qualitative d'au moins un marqueur a) tel que défini à la revendication 1 dans un carburant ou combustible hydrocarboné liquide comprenant les étapes suivantes :

• analyse d'un échantillon de carburant ou combustible liquide contenant au moins un marqueur a) par une méthode analytique,
• puis détection d'un ou plusieurs marqueurs a.

3. Procédé de détection selon la revendication 2, dans lequel la méthode analytique est une chromatographie gazeuse.

4. Procédé de détection selon la revendication 3, dans lequel la chromatographie gazeuse est une chromatographie gazeuse multidimensionnelle.

5. Procédé de détection selon l'une des revendications 2 à 4, dans lequel la détection est effectuée par spectrométrie de masse.

6. Procédé de détection qualitative et quantitative selon l'une des revendications 2 à 5 comprenant une étape ultérieure de mesure de la concentration de chacun des marqueurs a) détecté au sein du carburant ou combustible liquide hydrocarboné.

7. Procédé de détection selon la revendication 6, dans lequel la mesure de la concentration de chacun des marqueurs a) est effectuée par spectrométrie de masse couplée à la chromatographie gazeuse.

8. Procédé de détection qualitative et éventuellement quantitative d'au moins un marqueur a) selon la revendication 6 ou 7 par chromatographie multidimensionnelle couplée à un spectromètre de masse comprenant les étapes suivantes :

1) injection dans une $1^{ère}$ colonne de chromatographie d'un mélange liquide comprenant une composition hydrocarbonée liquide contenant un ou plusieurs marqueurs a) ;
2) séparation du ou des marqueurs a) et d'éventuels autres composés contenus dans le mélange ;
3) injection de la fraction dans une $2^{nde}$ colonne de chromatographie pour assurer la séparation complète de tous les composés, dont les marqueurs a),
4) puis passage dans un spectromètre de masse permettant l'identification de façon spécifique de chaque composé, (donc de chaque marqueur a)) et leur quantification éventuelle.

**Patentansprüche**

1. Verwendung mindestens einer flüssigen Zusammensetzung zur Markierung von flüssigen Kohlenwasserstoff-Kraftstoffen und -Brennstoffen, in die sie eingearbeitet werden, wobei die flüssige Zusammensetzung Folgendes umfasst:

a) mindestens einen Markierungsstoff, der aus den folgenden aliphatischen oder cycloaliphatischen Verbindungen ausgewählt ist:

- Tricyclodecenylisobutyrat (3a,4,5,6,7,7a-Hexahydro-4,7-methano-1h-inden-5(oder 6)-ylisobutyrat) (CAS 67634-20-2)
- Tricyclodecenylpropionat (CAS 17511-60-3)
- cis-3-Hexenylacetat (CAS 3681-71-8)
- Ethyllinalool (CAS 10339-55-6)
- Prenylacetat (CAS 1191-16-8)
- Ethylmyristat (CAS 124-06-1)
- para-tert-Butylcyclohexylacetat (CAS 32210-23-4)
- Butylacetat (CAS 123-86-4)
- Tricyclodecenylacetat (3a,4,5,6,7,7a-Hexa-hydro-4,7-methano-1h-inden-6-yl-acetat) (CAS 5413-60-5)
- Ethylcaprat (CAS 110-38-3),

b) ein Lösungsmittel oder eine Mischung von Lösungsmitteln

c) und gegebenenfalls ein oder mehrere funktionelle Additive für flüssige Kohlenwasserstoff-Kraftstoffe und/oder -Brennstoffe, die aus Detergentien, Dispergiermitteln, Mitteln zur Verbesserung der Verbrennung, Antischaummitteln, Mitteln zur Verbesserung der Leitfähigkeit, Korrosionsschutzadditiven, Schmiermitteladditiven, Verschleißschutzmitteln und/oder Reibungsmodifikatoren, Chelatbildnern und/oder Sequestriermitteln für Metalle, Demulgatoren, Farbmitteln, Kaltfließverbesserern, Metallpassivatoren, Aciditätsneutralisatoren, Markierungsstoffen, die von den Markierungsstoffen a) verschieden sind, usw. ausgewählt sind.

2. Verfahren zum qualitativen Nachweis mindestens eines Markierungsstoffs a) gemäß Anspruch 1 in einem flüssigen Kohlenwasserstoff-Kraftstoff oder -Brennstoff, das folgende Schritte umfasst:

• Analyse einer Probe von flüssigem Kraftstoff oder Brennstoff, der mindestens einen Markierungsstoff a) enthält, durch eine Analysenmethode,
• dann Nachweis eines oder mehrerer Markierungsstoffe a.

3. Nachweisverfahren nach Anspruch 2, bei dem es sich bei der Analysenmethode um eine Gaschromatographie handelt.

4. Nachweisverfahren nach Anspruch 3, bei dem es sich bei der Gaschromatographie um mehrdimensionale Gaschromatographie handelt.

5. Nachweisverfahren nach einem der Ansprüche 2 bis 4, bei dem der Nachweis durch Massenspektrometrie erfolgt.

6. Verfahren zum qualitativen und quantitativen Nachweis nach einem der Ansprüche 2 bis 5, umfassend einen nachfolgenden Schritt der Messung der Konzentration jedes der in dem flüssigen Kohlenwasserstoff-Kraftstoff oder -Brennstoff nachgewiesenen Markierungsstoffe a).

7. Nachweisverfahren nach Anspruch 6, bei dem die Messung der Konzentration jeder der Markierungsstoffe a) durch mit Gaschromatographie gekoppelte Massenspektrometrie erfolgt.

8. Verfahren zum qualitativen und gegebenenfalls quantitativen Nachweis mindestens eines Markierungsstoffs a) nach Anspruch 6 oder 7 durch mit einem Massenspektrometer gekoppelte mehrdimensionale Chromatographie, das folgende Schritte umfasst:

1) Injektion einer flüssigen Mischung, die eine flüssige Kohlenwasserstoffzusammensetzung, die einen oder mehrere Markierungsstoffe a) enthält, umfasst, in eine erste Chromatographiesäule;
2) Trennung des Markierungsstoffs bzw. der Markierungsstoffe a) und gegebenenfalls anderer Verbindungen, die in der Mischung enthalten sind;
3) Injektion der Fraktion in eine zweite Chromatographiesäule zur Gewährleistung der vollständigen Trennung aller Verbindungen einschließlich der Markierungsstoffe a);
4) dann Durchgang durch ein Massenspektrometer, was die spezifische Identifizierung jeder Verbindung (einschließlich jedes Markierungsstoffs a)) und gegebenenfalls ihre Quantifizierung ermöglicht.

## Claims

1. Use of at least one liquid composition for marking liquid hydrocarbon-based fuels and combustibles into which it is incorporated, said liquid composition comprising:

a) at least one marker, chosen from the following aliphatic or cycloaliphatic compounds:

• tricyclodecenyl isobutyrate (3a,4,5,6,7,7a-hexahydro-4,7-methano-1h-inden-5 (or 6) -yl) (CAS 67634-20-2)
• tricyclodecenyl propionate (CAS 17511-60-3)
• cis-3-hexenyl acetate (CAS 3681-71-8)
• ethyllinalool (CAS 10339-55-6)
• prenyl acetate (CAS 1191-16-8)
• ethyl myristate (CAS 124-06-1)
• para-tert-butylcyclohexyl acetate (CAS 32210-23-4)

• butyl acetate (CAS 123-86-4)
• tricyclodecenyl acetate (4,7-methano-1h-inden-6-ol, 3a,4,5,6,7,7a-hexahydro-) (CAS 5413-60-5)
• ethyl caprate (CAS 110-38-3)

b) a solvent or a mixture of solvents,
c) and optionally one or more functional additives for liquid hydrocarbon-based fuels and/or combustibles, chosen from detergents, dispersants, combustion improvers, antifoams, conductivity improvers, anticorrosion additives, lubricant additives, antiwear agents and/or friction modifiers, chelating agents and/or metal sequestrants, de-emulsifiers, colorants, cold-flow improvers, metal passivators, acidity neutralizers, markers other than the markers a), etc.

2. Process for the qualitative detection of at least one marker a) as defined in Claim 1 in a liquid hydrocarbon-based fuel or combustible, comprising the following steps:

• analysis of a liquid fuel or combustible sample containing at least one marker a) via an analytical method,
• and then detection of one or more markers a).

3. Detection process according to Claim 2, in which the analytical method is gas chromatography.

4. Detection process according to Claim 3, in which the gas chromatography is multi-dimensional gas chromatography.

5. Detection process according to one of Claims 2 to 4, in which the detection is performed by mass spectrometry.

6. Qualitative and quantitative detection process according to one of Claims 2 to 5, comprising a subsequent step of measuring the concentration of each of the markers a) detected in the liquid hydrocarbon-based fuel or combustible.

7. Detection process according to Claim 6, in which the measurement of the concentration of each of the markers a) is performed by mass spectrometry coupled to gas chromatography.

8. Process for the qualitative and optionally quantitative detection of at least one marker a) according to Claim 6 or 7 by multi-dimensional chromatography coupled to a mass spectrometer, comprising the following steps:

1) injection into a first chromatography column of a liquid mixture comprising a liquid hydrocarbon-based composition containing one or more markers a);
2) separation of the marker(s) a) and of any other compounds contained in the mixture;
3) injection of the fraction into a second chromatography column for the total separation of all the compounds, including the markers a),
4) and then passage through a mass spectrometer enabling specific identification of each compound (including each marker a)) and optional quantification thereof.

**RÉFÉRENCES CITÉES DANS LA DESCRIPTION**

**Documents brevets cités dans la description**

- US 4141692 A
- US 4209302 A
- FR 2212390
- US 3862120 A
- US 5234475 A
- EP 512404 A
- EP 1699907 A
- EP 1816181 A
- WO 2010039152 A
- US 5984983 A
- EP 1591514 A
- WO 01363544 A
- US 2008096790 A
- EP 861182 A
- EP 663000 A
- EP 736590 A
- EP 938535 A
- EP 680506 A
- EP 860494 A
- WO 9804656 A
- EP 915944 A
- FR 2772783
- FR 2772784
- EP 71513 A
- EP 100248 A
- FR 2528051
- FR 2528423
- EP 112195 A
- EP 172758 A
- EP 271385 A
- EP 291367 A
- EP 261959 A
- EP 593331 A
- EP 674689 A
- EP 327423 A
- EP 512889 A
- EP 832172 A
- US 20050223631 A
- US 5998530 A
- WO 9314178 A
- EP 573490 A

**Littérature non-brevet citée dans la description**

- *CHEMICAL ABSTRACTS,* 67634-20-2
- *CHEMICAL ABSTRACTS,* 17511-60-3
- *CHEMICAL ABSTRACTS,* 3681-71-8
- *CHEMICAL ABSTRACTS,* 10339-55-6
- *CHEMICAL ABSTRACTS,* 1191-16-8
- *CHEMICAL ABSTRACTS,* 124-06-1
- *CHEMICAL ABSTRACTS,* 32210-23-4
- *CHEMICAL ABSTRACTS,* 123-86-4
- *CHEMICAL ABSTRACTS,* 5413-60-5
- *CHEMICAL ABSTRACTS,* 110-38-3